(19) Europäisches Patentamt
European Patent Office
Office européen des brevets

(11) **EP 1 960 249 B1**

(12) **EUROPÄISCHE PATENTSCHRIFT**

(45) Veröffentlichungstag und Bekanntmachung des Hinweises auf die Patenterteilung:
**07.03.2012   Patentblatt 2012/10**

(21) Anmeldenummer: **06829513.8**

(22) Anmeldetag: **12.12.2006**

(51) Int Cl.:
**B62D 1/19** *(2006.01)*

(86) Internationale Anmeldenummer:
**PCT/EP2006/011927**

(87) Internationale Veröffentlichungsnummer:
**WO 2007/068435 (21.06.2007 Gazette 2007/25)**

(54) **ENERGIE ABSORBIERENDE VORRICHTUNG**

ENERGY ABSORBING DEVICE

DISPOSITIF D'ABSORPTION D'ENERGIE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.12.2005   EP 05027133**

(43) Veröffentlichungstag der Anmeldung:
**27.08.2008   Patentblatt 2008/35**

(73) Patentinhaber: **Inventus Engineering GmbH**
**6771 St. Anton/Montafon (AT)**

(72) Erfinder:
• **BATTLOGG, Stefan**
  **A-6771 St. Anton/Montafon (AT)**

• **PÖSEL, Jürgen**
  **A-6700 Bludenz (AT)**

(74) Vertreter: **Torggler, Paul Norbert et al**
**Wilhelm-Greil-Strasse 16**
**6020 Innsbruck (AT)**

(56) Entgegenhaltungen:
| | |
|---|---|
| **WO-A-00/37298** | **WO-A-01/92071** |
| **WO-A-03/033328** | **US-A1- 2001 048 362** |
| **US-A1- 2003 071 451** | **US-A1- 2003 102 658** |
| **US-B1- 6 234 528** | **US-B1- 6 514 001** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft eine Energie absorbierende Vorrichtung für den Insassenschutz in einem Fahrzeug mit einem Behälter, in dem ein magnetorheologisches Medium enthalten ist, mit einem im Behälter durch eine äußere Krafteinwirkung, insbesondere einen Schlag, Stoß oder Aufprall, beweglichen Druckelement, das das Medium durch eine eine Engstelle bildende Öffnung aus dem Behälter drückt, und mit einer ein veränderbares Magnetfeld erzeugenden Einrichtung zur Beeinflussung des Strömungswiderstandes der Engstelle.

Magnetorheologische Flüssigkeiten muss relativ wenig Energie für den Aufbau bzw. die Änderung des Feldes zugeführt werden, wobei die Energieabsorption an unterschiedliche Ausgangszustände und Bedingungen angepasst werden kann und weder Dichtungen noch mechanisch bewegliche Teile notwendig sind. Dies ist für die Funktion in einem Notfall besonders wichtig, da Aufprall dämpfende Vorrichtungen in den meisten Fällen überhaupt nicht zum Einsatz kommen, sodass ihre Funktionsfähigkeit nicht regelmäßig getestet werden kann.

Bei Anwendungen mit magnetorheologischen Flüssigkeiten können generell Nieder- und Hochdrucksysteme unterschieden werden. Stoßdämpfer, Sitzdämpfer, Fitnessgeräte usw. sind Niederdrucksysteme, bei deren wiederholter Aktion in einem Kolben-Zylindersystem oder dergleichen ein Innendruck in der magnetorheologischen Flüssigkeit von nicht mehr als ca. 50 bar aufgebaut werden soll. Die niederen Drücke werden durch das Verhältnis zwischen Zylinderdurchmesser und Kolbendurchmesser erreicht, wobei wegen der Spule im Kolben größere Kolbendurchmesser erforderlich sind. Bei Aufprallenergie absorbierenden Vorrichtungen ist dies anders, da diese nicht wiederholt eingesetzt werden. Es treten Drücke im Bereich von 50 bar bis ca. 200 bar auf, was das notwendige Volumen der teuren magnetorheologischen Flüssigkeit stark reduziert.

Eine Vorrichtung der eingangs genannten Art ist beispielsweise der US 6,279,952 zu entnehmen. Diese zeigt eine durch einen Aufprall stauchbare Lenksäule, bei der eine in einem Zylinder enthaltene magnetorheologische Flüssigkeit von einem üblichen Kolben durch Öffnungen im Kolben gedrückt wird, wobei der Zylinder in seiner gesamten Länge von einer Magnetspule umgeben ist. Eine Änderung des Magnetfeldes beeinflusst die Viskosität der Flüssigkeit und den Strömungswiderstand der Öffnungen. Die Änderung des Magnetfeldes erfolgt in Abhängigkeit von verschiedenen voreingestellten und beim Aufprall erfassten Parametern.

Eine in die Lenksäule eines Kraftfahrzeuges eingebaute Energie absorbierende Vorrichtung ist beispielsweise aus der US 5,870,930 bekannt. Die Lenksäule weist teleskopisch ineinander schiebbare Teile auf, wobei ein Teil mit einem ringförmigen Behälter versehen ist, in den eine geeignete Flüssigkeit, beispielsweise ein fließfähiges Silikon, eingefüllt ist. Am zweiten Teil ist eine Manschette fixiert, die nach Art eines Kolbens in den Behälter eintaucht und die Flüssigkeit bei einem Aufprall durch einen Kranz von kleinen Öffnungen auspresst. Die Öffnungen sind von einem ringförmigen Berstelement überdeckt.

Die WO 00/37298 beschreibt unter anderem auch eine justierbare Lenksäule mit einer Feststellvorrichtung, die zwei durch eine Verjüngung verbundene Zylinder aufweist, die mit magnetorheologischer Flüssigkeit gefüllt sind. Der Verjüngung ist ein Permanentmagnet, gegebenenfalls auch ein Elektromagnet zugeordnet, der den Durchfluss des Mediums blockiert, sobald die Lenksäule in der gewünschten Position fixiert ist. Eine durch die Verjüngung durchgehende Kolbenstange trägt beide Kolben in fixem Abstand und an den beiden verschiebbaren Teilen der Lenksäule ist einerseits das vorstehende Ende der Kolbenstange und andererseits das Gehäuse des zweiten Zylinders befestigt. Das Magnetfeld kann variiert werden, um bei einem Unfall die Fließfähigkeit des Mediums zu verändern.

Aufprallenergie absorbierende Vorrichtungen sind in Fahrzeugen nicht nur an der Lenksäule, sondern auch an einer Reihe von anderen Bauteilen von Vorteil bzw. notwendig, beispielsweise an Kopfstützen, Sicherheitsgurten, Sitzen und Sitzelementen, usw. Im Extremfall lassen sich in einem Kraftfahrzeug mehr als 20 unterschiedliche Einbauorte finden.

Für den Zusammenstoß relevante Komponenten an Sicherheitsgurten, Airbags usw. sind zurzeit meist einstufig auslösbar, maximal zweistufig. Eine mehrstufige Auslösung ist extrem aufwändig, eine variable Auslösung bisher unmöglich.

Beispielsweise sollte die Lenksäule einen Großteil der Aufprallenergie des Fahrers aufnehmen, also steif ausgeführt werden, wobei die Gegenkraft ca. 8000 N betragen sollte. Ist der Fahrer angegurtet und leicht, genügt eine Gegenkraft von 2000 N. Die viel zu hohe Gegenkraft von 8000 N kann bei leichten und angegurteten Fahrern zu schweren bis tödlichen Verletzungen führen. Ist die Lenkungsgegenkraft aber auf 2000 N eingestellt, würde ein nicht angegurteter Fahrer zu langsam verzögert und mit hoher Restenergie auf den Endanschlag der Lenksäulenverschiebung gedrückt. Da auch hier schwere Verletzungen die Folge sind, wurde versucht, den Airbag und den Sicherheitsgurt zu optimieren, sodass diese Kombination den Großteil der Aufprallenergie des Fahrers absorbiert und nur mehr geringe Restenergie für die Lenksäule übrig lässt, sodass eine kleine Gegenkraft genügt. Allerdings ist dadurch das Problem einer variablen Anpassung nicht gelöst, sondern nur teilverlagert.

Bezogen auf die Verzögerungswerte des Fahrerkörpers ist dies nachteilig, da wertvoller Weg verschenkt wird. Man kann den Aufprall in zwei Wegstrecken unterteilen, nämlich in einen ersten Verzögerungsweg während der Airbag- und Gurtfunktion, der im Durchschnitt etwa 40 cm beträgt, und in einen anschließenden zweiten Verzögerungsweg während der Lenksäulenverformung, der bis zu etwa 10 cm beträgt. Der Körper muss somit im ersten Verzögerungsweg stark verzögert werden, damit die Restenergie bei der Übergabe an den zweiten Verzögerungsweg gering ist. Die Verzögerung ist umgekehrt proportional zum Weg, d.h. der geringe zweite Verzögerungsweg bedeutet eine hohe Verzögerung. Da aber im zweiten Weg nur niedere Gegenkräfte zur Verfügung stehen sollen, um leichte Fahrer nicht zu gefährden, wird eine hohe Verzögerung im ersten Weg in Kauf genommen, sodass der Körper während des ersten Weges stark und bei kleinen und leichten Personen übermäßig stark belastet wird. Die angegebene durchschnittliche Wegstrecke von 40 cm für den ersten Verzögerungsweg bezieht sich auf einen mittelgroßen Fahrer. Bei kleinen Personen, die wesentlich näher am Lenkrad sitzen, ist der erste Verzögerungsweg wesentlich kürzer und etwa 25 cm. Der Anteil des zweiten Verzögerungsweges am Gesamtverzögerungsweg vergrößert sich so auf etwa ein Drittel, ohne dass die auf leichte Fahrer eingestellte Gegenkraft verändert werden kann. Die auf schwere Personen ausgelegte Verzögerung im ersten Verzögerungsweg muss daher noch größer werden und ist teilweise sogar so stark, dass der Körper zurückgeschleudert wird. Bei manchen Fahrzeugen kann daher der Airbag für leichte und kleine Fahrer abgeschaltet werden, wobei dann allerdings der Lenkung die erhöhte Gegenkraftfunktion zukommt. Sinnvoll und effektiv ist es, den Gesamtweg zu nützen (insgesamt ca. 50 cm) und in der Wegstreckensumme immer adäquat zu verzögern. Nur dies führt zu geringeren Belastungen für den Körper, und ist nur mit einem regelbaren System möglich ist.

In modernen Kraftfahrzeugen herrscht grundsätzlich Mangel an Bauraum, da für die zu befördernde Nutzlast möglichst viel Raum gelassen werden muss. Auch bei Lenksäulen ist es notwendig, vor allem die Länge, also die Erstreckung in der Richtung der Säule nicht durch den Einbau einer Energie absorbierenden Vorrichtung zu vergrößern. Die beschriebenen Kolbenzylindersysteme sind, da der Kolben als Druckelement fungiert, mit einer im Zylinder geführten Kolbenstange versehen, wobei die Führung in einem Bereich des Zylinders erfolgt, der außerhalb, das heißt jenseits des Aufnahmeraumes des enthaltenen Mediums liegt. Aufgrund der Druckbeaufschlagung ist eine massive Bauweise erforderlich, da weder die Kolbenstange ausknicken noch der Kolben im Zylinder verkanten darf.

Die Erfindung hat es sich zur Aufgabe gestellt eine Energie absorbierende Einrichtung der eingangs genannten Art so kurz als möglich zu bauen, und erreicht dies dadurch, dass an der am Medium anliegenden Seite des Druckelements ein Zugelement vorgesehen ist, mittels dem das Druckelement bei der äußeren Krafteinwirkung zur Engstelle hin gezogen wird, wobei das Zugelement an einem Umlenkkörper durch Verformung bei äußerer Krafteinwirkung umgelenkt wird.

Auf diese Weise kann nicht nur der im Folgenden als Behälter bezeichnete Zylinder um jenen außerhalb des Füllraumes liegenden Bereich verkürzt werden, der für die Führung der Kolbenstange erforderlich ist, um ein Ausknicken und Verkanten zu vermeiden, sondern auch eine weitere Längeneinsparung durch die Umlenkung des Zugelementes über den Umlenkkörper erreicht werden, da die Vorrichtung keine wachsende Ausschublänge aufweist. Das umgelenkte Zugelement kann dabei nicht nur parallel zum Behälter zurückgezogen werden, sondern, abhängig von der Konstruktion des in seiner Bewegung aufgrund der äußeren Krafteinwirkung zu verzögernden Bauteiles, in unterschiedliche Richtungen. Das umlenkbare Zugelement ist bevorzugt ein Seil oder ein flaches Band, wobei vor allem letzteres aus einem Material gefertigt werden kann, das bei der Umlenkung einen Verformungswiderstand bietet, dessen Überwindung zusätzlich Energie absorbiert.

Insbesondere bei Lenksäulen lässt sich eine bevorzugte Ausführung mit Vorteil einbauen, bei der das erste Ende des umlenkbaren Zugelementes mit dem Druckelement verbunden und das zweite Ende ortsfest gehalten ist, und dass der Umlenkkörper mit der Vorrichtung verschiebbar abgeordnet ist.

Zwischen dem Zugelement und dem Umlenkkörper kann eine relativ größere Reibung bestehen, deren Überwindung zusätzlich Energie absorbiert. Alternativ ist aber auch eine Ausführung sinnvoll, in der die der Umlenkkörper eine Umlenkrolle ist, da auch die Rotation der Umlenkrolle bei der Abarbeitung der äußeren Krafteinwirkung gebremst werden kann. Vor allem kann aber die rotierende Umlenkrolle einen Teil eines einfachen Getriebes bilden, wenn beispielsweise das Zugelement aus sich zwei Abschnitten zusammengesetzt ist, von denen der eine vom Druckelement kommend auf die eine Spule mit einem ersten Durchmesser bildende Umlenkrolle aufgewickelt wird, während der zweite Abschnitt, dessen zweites Ende ortsfest gehalten ist, von einer koaxialen zweiten Spule mit insbesondere größerem Durchmesser abgewickelt wird.

Das in der Vorrichtung enthaltene magnetorheologische Medium wird aus dem Behälter durch eine Engstelle, insbesondere an dem dem Druckelement gegenüber liegenden Behälterboden gedrückt. Bevorzugt ist daher auch das Zugelement durch die Engstelle aus dem Behälter herausgeführt, obwohl dies nicht zwingend erforderlich ist, da auch Ausführungen denkbar sind, in denen das Druckelement diametral durch die Behälterwandung ragende schneidenartige Fortsätze aufweist, an denen gezogen wird, und die dabei den Behälter schlitzen. Derartige Konstruktionen sind für Vorrichtungen, bei denen die äußere Krafteinwirkung durch einen unfallbedingten Aufprall erfolgt, ohne weiteres verwendbar, da die Zerstörung der Vorrichtung in Kauf genommen werden kann, und das Schlitzen der Behälterwandung ebenfalls Energie absorbiert.

Eine einmalig zu venwendende Vorrichtung der eingangs genannten Art ist mit einem steuerbaren Energieabsorber versehen, bei dem die Energieabsorption nicht nur in Abhängigkeit von der Fahrzeugverzögerung, dem Aufprallwinkel, der Masse des Fahrers, usw. variabel eingestellt, sondern auch während des Aufpralls verändert werden kann.

Dies lässt sich bevorzugt in einer Ausführung erreichen, in der an die Engstelle ein Austrittskanal anschließt, den die Einrichtung umschließt. Die Aufprallzeit ist naturgemäß sehr kurz und liegt entsprechend dem EuroNCAP-Test (<u>E</u>uropean <u>N</u>ew <u>C</u>ar <u>A</u>ssessment <u>P</u>rogramme) insbesondere zwischen 30 und 100 Millisekunden. Die Länge des Austrittskanals ist dabei so bemessen, dass die Verweilzeit, in der sich jedes magnetisierbare Partikel in dem Medium im Magnetfeld befindet, lange genug ist, damit sich alle Partikel vollständig ausrichten können. Diese Zeit ist zumindest eine Millisekunde. Die Länge des Austrittskanales errechnet sich aus der Formel:

$$L \geq \frac{V_m.t_v}{(t_a-t_v).F} \qquad \text{bzw.} \qquad L \geq \frac{X.Y.Z.t_v}{(t_a-t_v).B.H},$$

in der

$V_m$ das Volumen des Mediums im Behälter ist, wobei

X die Breite des Aufnahmeraumes des Behälters,
Y die Höhe des Aufnahmeraumes des Behälters, und
Z die Länge des Aufnahmeraumes des Behälters ist,

$t_v$ die Verweilzeit,
$t_a$ die Aufprallzeit, und
F die Querschnittsfläche des Austrittskanales ist, wobei

B die Breite des Austrittskanales, und
H die Höhe des Austrittskanales ist.

Da die Mindestverweilzeit etwa 1 % bis 1,2% der Aufprallzeit beträgt, kann sie in einer überschlägigen Rechnung auch vernachlässigt werden, wodurch die errechnete Länge des Austrittskanales um etwa 1 % bis 2% zunimmt. Wie ersichtlich, wirkt sich eine längere Verweilzeit direkt auf die Länge des Austrittskanales aus; in vielen Fällen lässt aber der vorhandene Einbauraum nur die Minimallänge zu.

In einem Kolben-Zylindersystem darf die Druckfläche des Kolbens nicht zu gering sein, da sonst der Druck zu hoch wird. Wenn 200 bar Druck, das sind 20 N/mm$^2$ Flächenpressung, nicht überschritten werden sollen, so bedarf es bei einer Aufprallkraft von 8000 N einer Druckfläche von 4 cm$^2$, was einem Kolbendurchmesser von etwa 2,25 cm entspricht. Je größer der Kolbendurchmesser ist, desto kleiner ist der Druck in Zylinder, was von Vorteil ist, desto größer ist aber die verdrängte Flüssigkeitsmenge, was von Nachteil ist, wobei sich das Volumen aus der Druckfläche von 4 cm$^2$ multipliziert mit einem der Lenksäulenverformung entsprechenden Hub, also ca. 10 cm, errechnet, und in diesem Beispiel 40 cm$^3$, also 40 ml beträgt. Aus der Druckfläche und der Verfahrgeschwindigkeit des Kolbens, die sich aus der Verformungsgeschwindigkeit beim Aufprall ableitet (bis zu 5 m/s), ergeben sich der Volumenstrom, ein daraus resultierendes, zu magnetisierendes Volumen pro Zeiteinheit, und eine bestimmte Querschnittsfläche der Engstelle.

Die Engstelle weist eine Eintrittsöffnung auf, die bevorzugt rechteckig ist und durch die Seitenwände des Behälters begrenzt ist, wobei die längere Rechteckseiten bildenden Seitenwände zur Öffnung konvergieren, sodass ein schmaler Schlitz gebildet ist. Der anschließende Austrittskanal weist bevorzugt den gleichen Querschnitt auf und ist durch den Spalt zwischen zwei Magnetpole bildenden Eisenteilen der das Magnetfeld erzeugenden Einrichtung geführt. Um den Abstand zwischen den beiden Polen klein zu halten - die Spalthöhe sollte unter 5 mm liegen, - können die beiden breiten Wände des Austrittskanals im Bereich der Eisenteile unterbrochen sein, sodass das Medium direkt mit den Polflächen in Berührung kommt. Da die Querschnittsfläche nicht verkleinert werden darf, führt eine Verringerung der Spalthöhe aber zu einer Verbreiterung des Austrittskanales. Konstruktiv brauchbare Spalthöhen liegen daher zwischen 1 mm und 3 mm. Eine möglichst optimale Ausführung sieht dabei vor, dass die Querschnittsfläche des Austrittskanales zumindest 10% der Querschnittsfläche des Behälters beträgt.

Die beiden Eisenteile können permanentmagnetisch sein, wobei ihr Magnetfeld durch das Magnetfeld einer ansteuerbaren Spule verstärkt oder abgeschwächt, gegebenenfalls auch deaktiviert werden kann.

In einer anderen Ausführung können die beiden Eisenteile über eine ansteuerbare Spule magnetisierbar sein, um den Strömungswiderstand von einem unteren Grenzwert zu erhöhen. Dieser kann beispielsweise von der Viskosität des unmagnetisierten Mediums und einem gegebenenfalls die Öffnung rund um das Zugelement abdeckenden Berstelement abhängig sein, das bei einem bestimmten Druck des Mediums die Öffnung freigibt.

Für die Stromversorgung ist insbesondere ein Kondensator vorgesehen; es ist aber auch eine andere geeignete Stromquelle, beispielsweise ein Akkumulator denkbar, wenn sie am Verwendungsort zur Verfügung steht.

Das Magnetfeld muss dabei zwar in der Länge, nicht aber in der Breite den gesamten Austrittskanal magnetisch beaufschlagen. Beispielsweise könnte das Magnetfeld auch nur in den beiden Randbereichen vorgesehen werden, sodass das Zugelement ohne Nachteil durch den mittleren Teil des Austrittskanals geführt werden kann.

Weiters kann der Austrittskanal im Magnetfeld auch durch einen Bypasskanal ergänzt werden, welcher zu- oder abgeschaltet werden kann. Damit kann der Gegenkraftbereich vergrößert werden. Der Bypass könnte auch "ins Freie" gehen, was bei sehr hohen Kräften vorteilhaft ist, da der Verstellbereich vergrößert wird.

Nachstehend wird nun die Erfindung anhand der Figuren der beiliegenden Zeichnungen näher beschrieben, ohne darauf beschränkt zu sein. Es zeigen:

Fig.1      einen schematischen Ausschnitt aus einer Lenksäule mit einer erfindungsgemäßen Vorrichtung,

Fig. 2      einen Schnitt gemäß Fig. 1, wobei die Lenksäule durch den Aufprall in Richtung des Pfeils A parallel verschoben ist,

Fig. 3      einen Schnitt gemäß Fig. 1, wobei die Lenksäule durch den Aufprall in Richtung des Pfeils B axial verschoben ist,

Fig. 4      eine schematische Schrägansicht einer erfindungsgemäßen Vorrichtung ohne Umlenkkörper,

Fig. 5      eine Stirnansicht der Vorrichtung nach Fig. 4 mit Magnetfeldverlauf,

Fig. 6      einen Teilschnitt durch eine bevorzugte Ausführung der Vorrichtung,

Fig. 7 und 8      zwei Schaltbilder zur Beschleunigung des Magnetfeldaufbaus,

Fig. 9      einen Längsschnitt durch einen Behälter der erfindungsgemäßen Vorrichtung,

Fig. 10      eine schematische Darstellung des Behälters und der Engstelle,

Fig. 11      vergrößert ein Detail einer zweiten Ausführung einer einer Lenksäule zugeordneten erfindungsgemäßen Vorrichtung, und

Fig. 12      eine Stirnansicht des Umlenkkörpers von Fig. 11

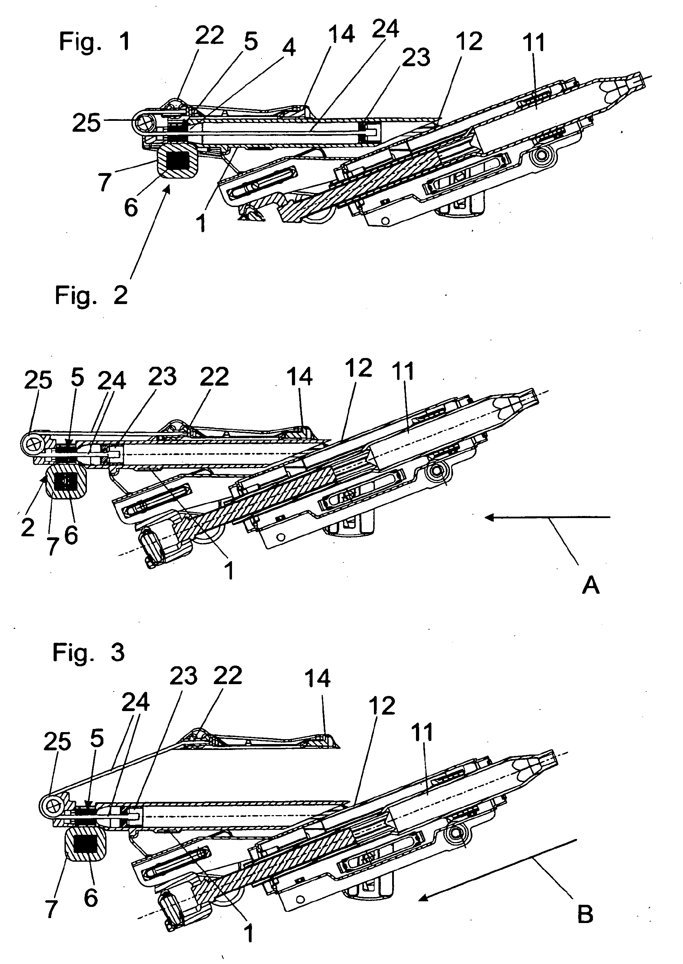

Eine Energie absorbierende Vorrichtung kann, wie Fig. 1 zeigt, beispielsweise einer Lenksäule 11 zugeordnet sein. Die Vorrichtung weist einen Behälter 1 auf, dessen Volumen durch ein bewegliches Druckelement 23 verkleinerbar ist und in dem eine magnetorheologische Flüssigkeit enthalten ist. Der Behälter 1 ist an einem in Bezug auf einen ortsfesten bzw. fahrzeugfesten Teil 14 verschiebbaren Teil 12 der Lenksäule 11 fixiert. Bei einem Aufprall kann sich die Lenksäule 11 verlagern bzw. verkürzen und die im Behälter 1 enthaltene Flüssigkeit wird vom Druckelement 23 durch eine Engstelle 4 und deren Austrittskanal 5 ausgedrückt, wobei der Strömungswiderstand der Engstelle 4 das Auspressen der Flüssigkeit verzögert, so dass Aufprallenergie absorbiert wird. Der Austrittskanal 5 ist von einer Einrichtung 2 zur Erzeugung eines veränderbaren Magnetfeldes umgeben. Die Einrichtung 2 umfasst einen Elektromagneten 6, 7, über den ein Magnetfeld erzeugt oder das Magnetfeld eines Permanentmagneten beeinflusst wird. Der Elektromagnet 6, 7 kann über Signale von Sensoren, die einen Aufprall überwachen, in Abhängigkeit von verschiedenen Kriterien, wie Gewicht und Sitzposition des Fahrers usw., angesteuert werden, wobei das veränderbare Magnetfeld die Viskosität der durch die Engstelle zu drückenden Flüssigkeit verändert, und die Gegenkraft größer oder kleiner wird.

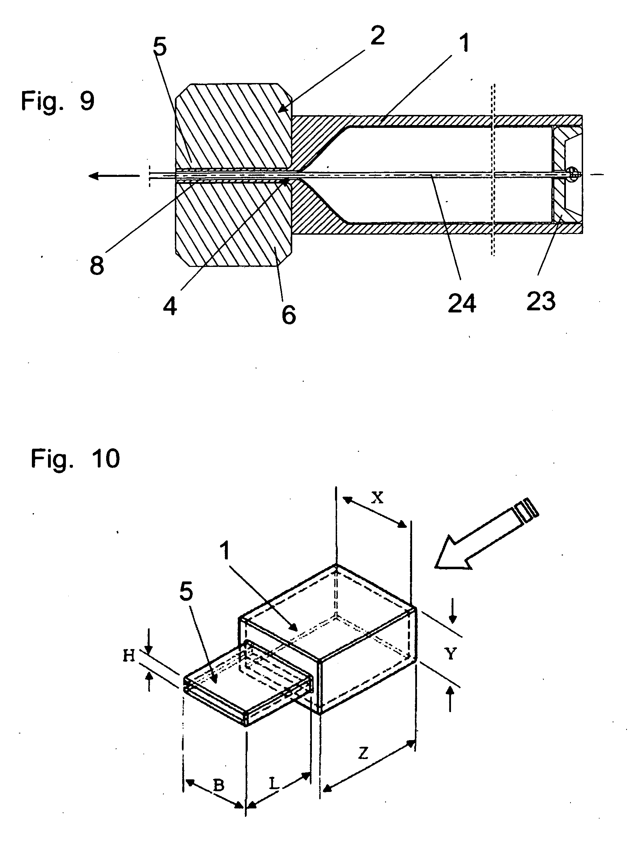

Die Vorrichtung weist eine Zugeinrichtung auf, die bei einer äußeren Krafteinwirkung am Druckelement 23 zieht. Hiefür ist (siehe auch Fig. 9) die Zugeinrichtung mit einem seil- bzw. bandförmigen Zugelement 24 versehen, dessen erstes Ende am Druckelement 23 befestigt ist. Das Zugelement 24 durchsetzt mittig den Austrittskanal 5 und ist über einem Umlenkkörper 25 zu einer ortsfesten, d.h. karosseriefesten Anbindungsstelle 22 für das zweite Ende des Zugelements 24 geführt. Der Unlenkkörper 25 ist am vorderen Ende des Behälters 1 ausgerichtet und bewegt sich daher mit dem Behälter 1, wenn sich bei einer äußeren Krafteinwirkung die Lenksäule 11 verlagert bzw. verkürzt. Der Umlenkkörper 25 entfernt sich von der Anbindungsstelle 22 am fahrzeugfesten Teil 14 und das fixierte Zugelement 24 zieht das Druckelement 23 an die Engstelle 4 heran, wie aus den Fig. 2 und 3 ersichtlich ist. Die Verfahrgeschwindigkeit des Druckelements 23 im Behälter 1 ist dabei doppelt so groß wie die Verfahrgeschwindigkeit des Behälters selbst, jeweils in Bezug auf den fahrzeugfesten Teil 14.

Je nach Konstruktion der Lenkung kann die Lenksäule 11 sich bei einer äußeren Krafteinwirkung, insbesondere einem Aufprall oder Zusammenstoß in Richtung des Pfeils A verlagern, wie in Fig. 2 gezeigt ist, oder in Richtung des Pfeils B verschieben, wie in Fig. 3 gezeigt ist. Nach Fig. 2 verbleibt das Zugelement 24 um 180 ° umgelenkt und wird parallel zum Behälter 1 zur Anbindungsstelle 22 zurückgeführt, wie in Fig. 2 dargestellt ist. Bei der Verkürzung der Lenksäule 11 gemäß Fig. 3 wird der zur Anbindungsstelle 22 zurückgeführte Abschnitt schräg verlagert.

Der Vergleich der Fig. 2 und 3 zeigt deutlich, dass aufgrund der Umlenkung eines umlenkbaren Zugelements 24 die Anbindungsstelle 22 an nahezu beliebiger Stelle rund um die Energie absorbierende Vorrichtung vorgesehen werden kann, und dass der für die Verschiebung des Behälters erforderliche vordere Freiraum sehr klein ist. Ein Vorschub des Behälters nur im Falle eines Zusammenstoßes oder Aufpralls bedeutet weiters auch, dass die Vorrichtung in ihrer kürzesten Länge montiert werden kann, und eine eventuelle Beschädigung von Fahrzeugelementen vor dem Behälter bei einem Aufprall im allgemeinen nicht von Bedeutung ist, wenn ohnedies Teile des Fahrzeugs beschädigt werden. Die Verwendung eines Zugelementes 24 zur Bewegung des Druckelements 23 verringert die Gefahr des Verkantens des Druckelements 23 im Behälter 1, da sich der Abstand der Führungsbereiche der Behälterwandung und des Austrittskanals 5 im Gegensatz zu einer an der anderen Seiten geführten Kolbenstange aus einer maximalen Größe verringert. Der Zugeinrichtung kann weiters auch ein nicht gezeigter Zugsensor zugeordnet sein.

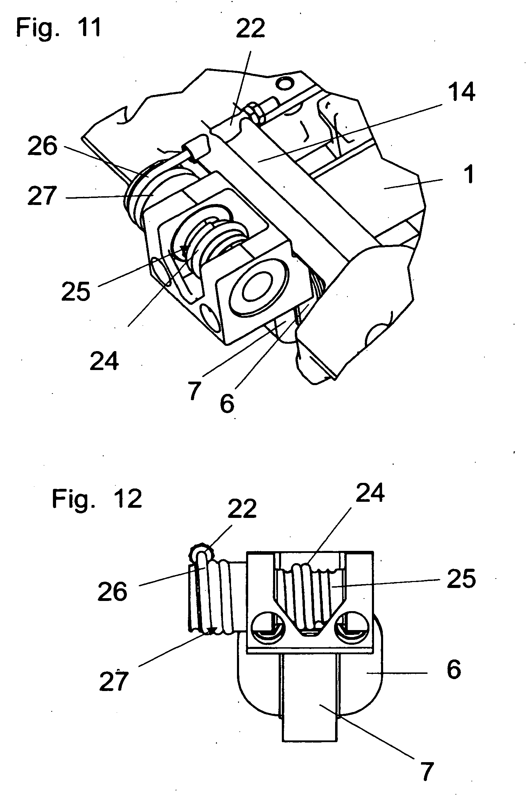

Der Umlenkkörper 25 kann ein Gleit- oder Wälzkörper sein. Ein Gleitkörper erhöht die Reibung und damit die Energieabsorption, ein Wälzkörper ermöglicht hingegen die Verwendung eines Drehsensors zur Ermittlung von Daten, die in einer Steuerungselektronik für eine Anpassung des Magnetfeldes ausgewertet werden können. Ein weiterer Vorteil eines Wälzkörpers ist in den Fig. 11 und 12 gezeigt.

In Fig. 9 sind Details besser erkennbar. Der einen beliebigen Querschnitt aufweisende Behälter 1 verjüngt sich zu einer rechteckigen flachen Öffnung an der Engstelle 4 mit ihrem anschließenden Austrittskanal 5, durch den das Zugelement 24 geführt ist. Die Wände 8 des Austrittskanals 5 sind vorzugsweise aus nichtmagnetischem Material.

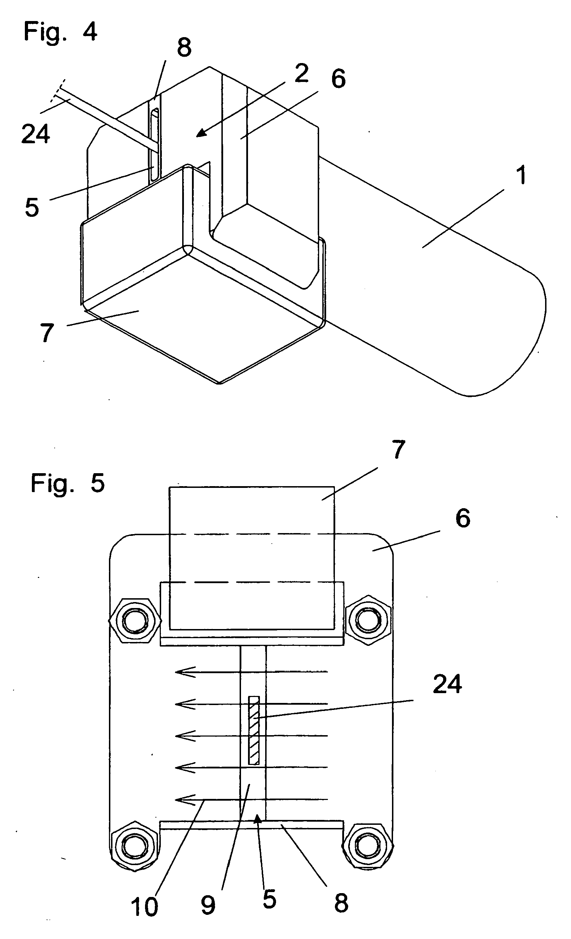

Fig. 4 und 5 zeigen den Aufbau der Einrichtung 2 zur Erzeugung des veränderbaren Magnetfeldes 10 mit C-förmigen Eisenelementen 6, denen eine Spule 7 zugeordnet ist. Der Austrittskanal 5 durchsetzt den Spalt 9 zwischen den Polflächen der Eisenelemente 6. Wie Fig. 4 zeigt, können die beiden breiten Wände des Austrittskanals an den Eisenelementen 6 ausgenommen sein, sodass nur die schmalen Wände 8 vorhanden sind. Der Spalt 9, der eine Höhe von maximal 5 mm, bevorzugt zwischen 1 mm und 3 mm aufweist, ist dadurch minimiert, und die magnetorheologische Flüssigkeit ist in direktem Kontakt mit den Polflächen. Das Zugelement 24 durchsetzt den Austrittskanal 5 etwa mittig.

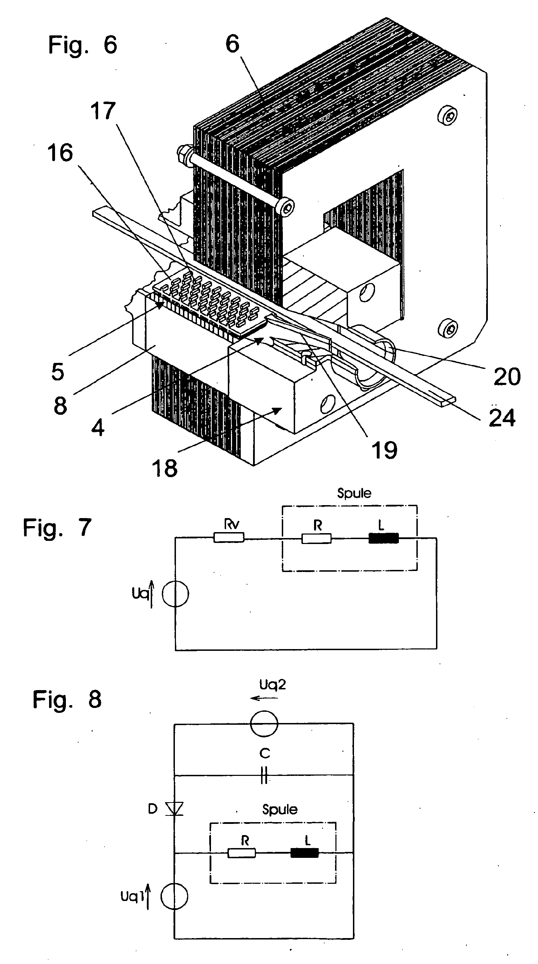

Fig. 6 zeigt konstruktive Details einer erfindungsgemäßen Vorrichtung im Teilschnitt. Der durch die Eisenelemente 6 führende Austrittskanal 5 ist durch eine Trennplatte 16 unterteilt, von der nach beiden Seiten Stege 17 hoch stehen. Die Verweilzeit des Mediums im Austrittskanal 5 wird durch die Einbauteile 16, 17 verlängert, sodass das Medium länger dem Magnetfeld ausgesetzt ist, ohne dass der Elektromagnet größer gemacht werden muss. Die Verweilzeit sollte zumindest eine Millisekunde, bevorzugt zumindest eineinhalb Millisekunden betragen, um auch bei Kraftspitzen, die extrem hohe Strömungsgeschwindigkeiten durch den Austrittskanal 5 bewirken, eine ausreichende Magnetisierung zu erzielen. Weitere Möglichkeiten für die Verlängerung der Verweilzeit sind die Ausbildung von Unebenheiten in den Begrenzungswänden 8 des Austrittskanales 5, alternierend in den Spalt 9 vorstehende bzw. rückspringende Stirnflächen der Eisenelemente 6, oder eine ein- oder mehrmalige Umlenkung des gesamten Austrittskanales 5, beispielsweise in Art von Schikanen. Die in den Austrittskanal 5 mündende Öffnung des Behälters ist in dieser Ausführung an einem insbesondere zweiteiligen Behälterkopf 18 ausgebildet, der mit Leitstegen 19 für eine gleichmäßige Verteilung und Einleitung des Mediums versehen ist. Der Behälterkopf 18 weist einen Gewindestutzen 20 auf, auf den der Behälter 1 mit einem entsprechenden die Öffnung tragenden Gewinde aufgeschraubt werden kann.

Ist das Magnetfeld anfangs eingeschaltet, dann addiert sich der höhere Strömungswiderstand zu den Trägheitskräften der Komponenten und den Schlag-/Stosskräften, wodurch es eine hohe Gegenkraftspitze gibt. Besser ist es deshalb, wenn das Magnetfeld so lange ausgeschaltet ist, bis die erste Lastspitze vorbei ist und alle Komponenten beschleunigt sind. Erst danach (nach ca. 3 ms) sollte das Magnetfeld sehr rasch aufgebaut werden (im Bereich von ca. 10 ms). Dadurch kann die Gegenkraftkurve noch besser an die Gegebenheiten angepasst werden und während des Durchströmens des Mediums durch den Austrittskanal 5 geregelt werden, zum Beispiel in Anpassung an eine Fahrerpositions- und/oder Fahrergewichtserkennung, einer Beschleunigungsmessung, und so weiter.

Um das Magnetfeld rasch aufzubauen, gibt es zum Beispiel die in Fig. 7 und 8 gezeigten Schaltungen. Da die Zeitkonstante UR, nach der ca. 63% des Magnetfeldes aufgebaut sind, umso kleiner wird, je größer der Widerstand R ist, kann gemäß Fig. 6 der rasche Aufbau des Magnetfeldes durch einen in Serie zur Spule der Einrichtung 2 geschalteten Vorwiderstand Rv erreicht werden, der dann überbrückt oder ausgeschaltet wird.

Fig. 8 zeigt eine Möglichkeit, in der ein Kondensator C von einer separaten, zweiten Spannungsquelle Uq2 geladen wird und zusammen mit einer Diode D eine im ersten Moment hohe Spannung an die Spule der Einrichtung 2 weitergibt. Die kurze Spannungsspitze beträgt etwa das 2- bis 3-fache der von der ersten Spannungsquelle Uq1 gelieferten Spannung, mit der das Magnetfeld anschließend in der gewünschten Größe gehalten wird.

Der in Fig. 9 im Längsschnitt gezeigte Behälter 1 kann auch in Art eines Faltenbalges ausgebildet und daher komprimierbar sein, wobei das Zugelement 24 am Boden des Faltenbalges angreift, um die Flüssigkeit auszudrücken. Wenn die Querschnittsfläche des Behälters über die Länge im Wesentlichen konstant ist, ist auch der Strömungswiderstand der Engstelle 4 gleich bleibend, da pro Weg- oder Zeiteinheit dieselbe Menge durchgedrückt wird. Wenn die Querschnittsfläche des Behälters sich über die Länge ändert (gleichmäßig oder ungleichmäßig) vergrößert oder in der Mitte am größten ist, so ändert sich in gleicher Weise auch der Strömungswiderstand der Engstelle 4. Eine Regeleinrichtung an der Engstelle 4 ist nicht erforderlich, um einen variierenden Strömungswiderstand zu erzeugen, da unterschiedliche Aufpralldämpfungswerte bereits durch die dazupassende Behälterform erreicht werden können. Die Regeleinrichtung 2 an der Engstelle 4 ermöglicht aber eine Variierbarkeit des Strömungswiderstandes in Abhängigkeit von verschiedenen Kriterien.

Kommt es zu einem Unfall, so wird durch den Aufprall des Oberkörpers auf das Lenkrad das Volumen des Behälters 1 verringert und die Einrichtung 2 regelt den Durchfluss des Mediums durch den Austrittskanal 5 durch eine entsprechende Änderung der Viskosität in Abhängigkeit von Signalen eines Rechners, der verschiedene Messdaten und Parameter verarbeitet.

Als Stromquelle ist ein beispielsweise im Bereich des Lenkrades untergebrachter Kondensator ausreichend, sodass das System auch bei Ausfall der Stromversorgung des Kraftfahrzeuges funktionsfähig bleibt. Fallen die Stromversorgung oder die Elektronik vollständig aus, so wirkt in jedem Fall der Strömungswiderstand der Engstelle allein, der beispielsweise eine Größe von 2000 N aufweist.

Fig. 10 zeigt schematisch die in der oben stehenden Formel für die Berechnung der Länge L des Austrittkanals 5 verwendeten Größen des Behälters 1 und des Austrittkanals 5.

Fig. 11 und 12 zeigen eine Ausführung bei der der Umlenkkörper 25 durch eine erste Spule gebildet ist, auf der sich das Zugelement 24 aufwickeln kann. Koaxial mit der ersten Spule ist eine drehgekoppelte zweite Spule 27 vorgesehen, auf der ein zweiter Abschnitt 26 des Zugelements 24 aufgewickelt ist, dessen freies Ende in der karosseriefesten Anbindungsstelle 22 fixiert ist. Die Wickeldurchmesser der beiden Spulen sind unterschiedlich, sodass eine Über- oder Untersetzung erfolgt. Die Spulen können auch symmetrisch angeordnet werden, d. h. es kann an beiden Seiten der ersten Spule eine zweite Spule 27 vorgesehen werden.

Die in den Figuren beschriebene Aufprallenergie absorbierende Vorrichtung ist insbesondere zum Einbau an Lenksäulen geeignet. Eine ziehende Bewegung des Druckelements lässt sich aber gerade in Kraftfahrzeugen auch anderen Bauteilen zuordnen, zumal zwar die äußere Krafteinwirkung nur aus einer beschränkten Anzahl von Richtungen erfolgt - der EuroNCAP-Test sieht beispielsweise einen Frontaufprall und eine Seitenaufprall vor - , die Umlenkung aber in jede beliebige Richtung, also auch nach unten oder oben möglich ist. Eine erfindungsgemäße Energie absorbierende Vorrichtung lässt sich daher meist ohne besondere Bauraumprobleme auch an Kopfstützen, Sicherheitsgurten, Sitzen, und Sitzelemente, Stoßfängeraufhängungen, usw. vorsehen.

**Patentansprüche**

1. Energie absorbierende Vorrichtung für den Insassenschutz in einem Fahrzeug mit einem Behälter (1), in dem ein magnetorheologisches Medium enthalten ist, mit einem im Behälter (1) durch eine äußere Krafteinwirkung, insbesondere einem Schlag, Stoß oder Aufprall, beweglichen Druckelement (23), das das Medium durch eine eine Engstelle (4) bildende Öffnung aus dem Behälter (1) drückt, und mit einer ein veränderbares Magnetfeld (10) erzeugenden Einrichtung (2) zur Beeinflussung des Strömungswiderstandes der Engstelle (4), **dadurch gekennzeichnet, dass** an der am Medium anliegenden Seite des Druckelements (23) ein Zugelement (24) vorgesehen ist, mittels dem das Druckelement (23) bei der äußeren Krafteinwirkung zur Engstelle (4) hin gezogen wird, wobei das Zugelement (24) an einem Umlenkkörper (25) durch Verformung bei äußerer Krafteinwirkung umgelenkt wird.

2. Vorrichtung nach Anspruch 1, **dadurch gekennzeichnet, dass** die Engstelle an dem dem Druckelement (23) gegenüber liegenden Boden des Behälters (1) vorgesehen ist.

3. Vorrichtung nach Anspruch 1 oder 2, **dadurch gekennzeichnet, dass** das Zugelement (24) durch die Engstelle (4) geführt ist.

4. Vorrichtung nach einem der Ansprüche 1 bis 3, **dadurch gekennzeichnet, dass** das erste Ende des Zugelementes (24) mit dem Druckelement (23) verbunden und das zweite Ende ortsfest gehalten ist, und dass der Umlenkkörper (25) mit der Vorrichtung verschiebbar angeordnet ist.

5. Vorrichtung nach einem der Ansprüche 1 bis 4, **dadurch gekennzeichnet, dass** an die Engstelle (4) ein Austrittskanal (5) anschließt, der durch den Spalt (9) zwischen zwei Magnetpole bildenden Eisenteilen (6) der Einrichtung (2) geführt ist.

6. Vorrichtung nach Anspruch 5, **dadurch gekennzeichnet, dass** der Austrittskanal (5) den Strömungswiderstand erhöhende Einbauten (16, 17) aufweist.

7. Vorrichtung nach Anspruch 5 oder 6, **dadurch gekennzeichnet, dass** für eine äußere Krafteinwirkung durch einen unfallbedingten Aufprall die Länge des Austrittskanales (5) durch folgende Formel definiert ist:

$$L \geq \frac{V_m.t_v}{(t_a - t_v).F} \quad ,$$

in der

$V_m$ das Volumen des Mediums im Behälter (1),
$t_v$ die Verweilzeit des Mediums im Austrittskanal (5),
$t_a$ die Aufprallzeit, und
F die Querschnittsfläche des Austrittskanales (5) ist.

8. Vorrichtung nach einem der Ansprüche 1 bis 7, **dadurch gekennzeichnet, dass** die das veränderbare Magnetfeld erzeugende Einrichtung (2) zumindest einen Permanentmagneten umfasst und ein steuerbarer Elektromagnet zur Änderung des Magnetfeldes des Permanentmagneten vorgesehen ist.

9. Vorrichtung nach einem der Ansprüche 1 bis 8, **dadurch gekennzeichnet, dass** die das veränderbare Magnetfeld (10) erzeugende Einrichtung (2) zumindest einen steuerbaren Elektromagneten umfasst.

10. Vorrichtung nach einem der Ansprüche 1 bis 9, **dadurch gekennzeichnet, dass** eine Steuerungselektronik und mindestens ein Sensor vorgesehen sind.

11. Vorrichtung nach einem der Ansprüche 1 bis 10, **dadurch gekennzeichnet, dass** der Zugeinrichtung ein Zugsensor zugeordnet ist.

12. Lenksäule mit einer Energie absorbierenden Vorrichtung nach einem der Ansprüche 1 bis 11.

13. Verfahren für eine Vorrichtung nach einem der Ansprüche 1 bis 12 zur Absorption von Energie eines aufprallenden Fahrzeugs, wobei ein bewegliches Druckelement (23) ein magnetorheologisches Medium durch eine Engstelle (4) drückt, deren Strömungswiderstand durch ein veränderbares Magnetfeld gesteuert werden kann, **dadurch gekennzeichnet, dass** das Druckelement (23) zur Engstelle (4) hin gezogen wird, wobei das Zugelement (24) an einem Umlenkkörper (25) durch Verformung bei äußerer Krafteinwirkung umgelenkt wird.

**Claims**

1. An energy absorbing device for occupant protection in a motor vehicle, said device comprising a container (1) containing a magneto-rheological medium, a pressure element (23) movable in the container (1) by an external force, in particular a stroke, thrust or bump, said pressure element (23) forcing the medium out of the container (1) through an opening forming a constriction (4), and comprising a device (2) generating a variable magnetic field (10) for influencing the flow resistance of the constriction (4), **characterised in that** a pull element (24) is provided on that side of the pressure element (23) which adjoins the medium, the pressure element (23) being pulled towards the constriction (4) upon the impact of the external force by means of the pull element (24), wherein the pull element (24) is being deflected at a deflection body (25) by deformation upon the impact of the external force.

2. The device according to claim 1, **characterised in that** the constriction is provided on the bottom of the container (1) that is opposite of the pressure element (23).

3. The device according to claim 1 or 2, **characterised in that** the pull element (24) extends through the constriction (4).

4. The device according to one of claims 1 to 3, **characterised in that** the first end of the pull element (24) is connected to the pressure element (23) and the second end is fixedly held, and that said deflection body (25) is disposed to be displaceable together with the device.

5. The device according to one of claims 1 to 4, **characterised in that** following the constriction (4) there is an oulet duct (5) which is led through the gap (9) between two iron parts (6) forming magnet poles of the device (2).

6. The device according to claim 5, **characterised in that** the outlet duct (5) comprises fittings (16, 17) increasing the flow resistance.

7. The device according to claim 5 or 6, **characterised in that** for the impact of an external force upon an accident the length of the outlet duct (5) is defined by the following formula:

$$L \geq \frac{V_m . t_v}{(t_a - t_v) . F},$$

where

$V_m$ is the volume of the medium in the container (1),
$t_v$ is the dwell time of the medium in the outlet duct (5),
$t_a$ is the impact time, and
F is the cross-sectional area of the outlet duct (5).

8. The device according to one of claims 1 to 7, **characterised in that** the device (2) generating the variable magnetic field comprises at least one permanent magnet, and a controllable electromagnet for changing a magnetic field of the permanent magnet is provided.

9. The device according to one of claims 1 to 8, **characterised in that** the device (2) generating the variable magnetic field (10) comprises at least one controllable electromagnet.

10. The device according to one of claims 1 to 9, **characterised in that** control electronics and at least one sensor are provided.

11. The device according to one of claims 1 to 10, **characterised in that** a pull sensor is assigned to the pull device.

12. A steering column comprising an energy absorbing device according to one of claims 1 to 11.

13. A method for a device according to one of claims 1 to 12 of absorbing energy from an external force acting on a vehicle, wherein a movable pressure element (23) forces a magneto-rheological medium through a constriction (4), whose flow resistance can be controlled by a variable magnetic field, **characterised in that** the pressure element (23) is being pulled towards the constriction (4), wherein the pull element (24) is being deflected at a deflection body (25) by deformation upon the impact of the external force.

**Revendications**

1. Dispositif d'absorption d'énergie pour la protection des passagers dans un véhicule avec un contenant (1) dans lequel est contenu un milieu magnéto-rhéologique, avec un élément de pression (23) mobile dans le contenant (1) par application extérieure d'une force, en particulier un coup, un choc ou une collision, que le milieu pousse hors du contenant (1) à travers une ouverture formant un resserrement (4), et avec un dispositif (2) produisant un champ magnétique variable (10) pour influencer la résistance hydraulique du resserrement (4), **caractérisé en ce que** sur le côté, adjacent au milieu, de l'élément de pression (23) est prévu un élément de traction (24), au moyen duquel l'élément de pression (23) est tiré vers le rétrécissement (4) lors de l'application extérieure d'une force, l'élément de traction (24) étant renvoyé sur un corps de renvoi (25) par déformation lors de l'application extérieure d'une force.

2. Dispositif selon la revendication 1, **caractérisé en ce que** le resserrement est prévu sur le fond, situé en face de l'élément de pression (23), du contenant (1).

3. Dispositif selon la revendication 1 ou 2, **caractérisé en ce que** l'élément de traction (24) est guidé à travers le resserrement (4).

4. Dispositif selon l'une des revendications 1 à 3, **caractérisé en ce que** la première extrémité de l'élément de traction (24) est reliée à l'élément de pression (23) et la deuxième extrémité est maintenue stationnaire, et **en ce que** le corps de renvoi (25) est disposé de façon déplaçable avec le dispositif.

**5.** Dispositif selon l'une des revendications 1 à 4, **caractérisé en ce qu'**un canal de sortie (5) se raccorde au resserrement (4), qui est guidé à travers la fente (9) entre deux parties de fer (6), formant deux pôles magnétiques, du dispositif (2).

**6.** Dispositif selon la revendication 5, **caractérisé en ce que** le canal de sortie (5) présente des éléments encastrés (16, 17) accroissant la résistance hydraulique.

**7.** Dispositif selon la revendication 5 ou 6, **caractérisé en ce que** pour l'application extérieure d'une force par une collision suite à un accident, la longueur du canal de sortie (5) est définie par la formule suivante :

$$L \geq \frac{V_m \cdot t_v}{(t_a - t_v) \cdot F}$$

dans laquelle $V_m$ est le volume du milieu dans le contenant (1), $t_v$ le temps de séjour du milieu dans le canal de sortie (5), $t_a$ le temps de collision, et F la surface de section du canal de sortie (5).

**8.** Dispositif selon l'une des revendications 1 à 7, **caractérisé en ce que** le dispositif (2) produisant le champ magnétique variable comprend au moins un aimant permanent et **en ce qu'**un électro-aimant contrôlable est prévu pour modifier le champ magnétique de l'aimant permanent.

**9.** Dispositif selon l'une des revendications 1 à 8, **caractérisé en ce que** le dispositif (2) produisant le champ magnétique variable (10) comprend au moins un électro-aimant contrôlable.

**10.** Dispositif selon l'une des revendications 1 à 9, **caractérisé en ce qu'**une commande électronique et au moins un capteur sont prévus.

**11.** Dispositif selon l'une des revendications 1 à 10, **caractérisé en ce que** le dispositif de traction est affecté à un capteur de traction.

**12.** Colonne de direction avec un dispositif d'absorption d'énergie selon l'une des revendications 1 à 11.

**13.** Procédé pour un dispositif selon l'une des revendications 1 à 12 pour l'absorption d'énergie d'un véhicule entrant en collision, dans lequel un élément de pression mobile (23) pousse un milieu magnéto-rhéologique à travers un resserrement (4), dont la résistance hydraulique peut être commandée par un champ magnétique variable, **caractérisé en ce que** l'élément de pression (23) est tiré vers le resserrement (4), l'élément de traction (24) étant renvoyé sur un corps de renvoi (25) par déformation lors de l'application extérieure d'une force.

Fig. 1

Fig. 2

Fig. 3

Fig. 4

Fig. 5

# Fig. 6

# Fig. 7

# Fig. 8

Fig. 9

Fig. 10

Fig. 11

22

14

26

27

1

25

24

7  6

Fig. 12

24

22

26

25

27

6

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6279952 B
- US 5870930 A
- WO 0037298 A